(19) Europäisches Patentamt
European Patent Office
Office européen des brevets

(11) EP 3 888 890 A1

(12) **EUROPEAN PATENT APPLICATION**
published in accordance with Art. 153(4) EPC

(43) Date of publication:
**06.10.2021 Bulletin 2021/40**

(21) Application number: **19890034.2**

(22) Date of filing: **22.11.2019**

(51) Int Cl.:
***B29C 64/314*** *(2017.01)* ***B29C 64/40*** *(2017.01)*

(86) International application number:
**PCT/JP2019/045781**

(87) International publication number:
**WO 2020/110935 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.11.2018 JP 2018220432**

(71) Applicant: **Kao Corporation**
**Chuo-ku,**
**Tokyo 103-8210 (JP)**

(72) Inventor: **KUBOTA,Kazuo**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

# (54) THREE-DIMENSIONAL OBJECT PRECURSOR TREATMENT AGENT COMPOSITION

(57) The composition of an agent for treating a precursor of a three-dimensional object of the present invention is a composition of an agent for treating a precursor of a three-dimensional object for removing a support material including a (meth)acrylic acid-based copolymer having a hydrophilic monomer and a hydrophobic monomer as a monomer unit from a precursor of a three-dimensional object including a three-dimensional object and the support material, wherein the composition of an agent for treating a precursor of a three-dimensional object contains a compound represented by Formula (I) below (component A); and water (component B), and has a pH of 12 or more. According to the composition of an agent for treating a precursor of a three-dimensional object of the present invention, a support material including a (meth)acrylic acid-based copolymer can be removed more quickly than before.

[Formula 1]

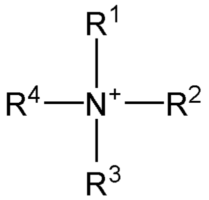

(I)

In Formula (I), $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

Fig.1

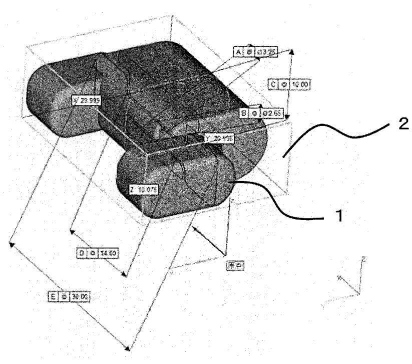


EP 3 888 890 A1

## Description

### TECHNICAL FIELD

The present invention relates to a composition of an agent for treating a precursor of a three-dimensional object.

### BACKGROUND ART

The 3D printer is one type of rapid prototyping, and it is a three-dimensional printer modeling a three-dimensional object based on 3D data such as 3D CAD and 3D CG. Systems of 3D printing have been known, such as a fused deposition modeling system (hereinafter referred to as an FDM system), an inkjet ultraviolet curing system, a stereolithography system, and a selective laser sintering system. Among these systems, the FDM system is a modeling system of heat-melting, extruding, and laminating polymer filaments to obtain a three-dimensional object, and the FDM system does not use a reaction of the material unlike other systems. Accordingly, a 3D printer of an FDM system is small and inexpensive, and has become popular in recent years as an apparatus with less post-processing. In order to model a three-dimensional object having a more complex shape in a FDM system, a modeling material constituting the three-dimensional object and a support material for supporting a three-dimensional structure of the modeling material are laminated to obtain a precursor of the three-dimensional object, and then the support material is removed from the precursor of the three-dimensional object to obtain the target three-dimensional object.

Examples of a method for removing the support material from the precursor of a three-dimensional object include a method of using a (meth)acrylic acid-based copolymer in the support material and soaking the precursor of a three-dimensional object in an agent for treating a precursor of a three-dimensional object containing an alkali to remove the support material (for example, JP-T-2008-507619, JP-T-2012-509777, WO2017/199323, and WO2017/199324). This method uses carboxylic acid in the (meth)acrylic acid-based copolymer being neutralized by alkalis and dissolved into an alkaline aqueous solution. The (meth)acrylic acid-based copolymer contained in the support material used in this method has a hydrophobic group from the viewpoints of heat-melting, extruding, and laminating property by a 3D printer. The (meth)acrylic acid-based copolymer also has a hydrophilic group from the viewpoint of solubility into the agent for treating the precursor of the three-dimensional object.

### SUMMARY OF THE INVENTION

The composition of an agent for treating a precursor of a three-dimensional object of the present invention is a composition of an agent for treating a precursor of a three-dimensional object for removing a support material including a (meth)acrylic acid-based copolymer having a hydrophilic monomer and a hydrophobic monomer as a monomer unit from a precursor of a three-dimensional object including a three-dimensional object and the support material, wherein the composition of an agent for treating a precursor of a three-dimensional object contains a compound represented by Formula (I) below (component A); and water (component B), and has a pH of 12 or more.

[Formula 1]

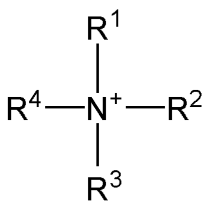

(I)

In Formula (I), $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

A method for manufacturing a three-dimensional object of the present invention is a method for manufacturing a three-dimensional object, including: a modeling step of obtaining a precursor of a three-dimensional object including a three-dimensional object and a support material including a (meth)acrylic acid-based copolymer having a hydrophilic monomer and a hydrophobic monomer as a monomer unit; and a support material removing step of bringing the precursor of a three-dimensional object into contact with the composition of an agent for treating a precursor of a three-dimensional object to remove the support material.

The support material removing method of the present invention is a support material removing method, including the step of: bringing a precursor of a three-dimensional object including a three-dimensional object and a support material including a (meth)acrylic acid-based copolymer having a hydrophilic monomer and a hydrophobic monomer as a monomer unit into contact with the composition of an agent for treating a precursor of a three-dimensional object to remove the support material.

BRIEF DESCRIPTION OF THE DRAWINGS

Fig 1 is a schematic drawing showing a shape of the evaluation sample used in the example.

MODE FOR CARRYING OUT THE INVENTION

When a conventional agent for treating a precursor of a three-dimensional object is used, it takes time to remove a support material containing a (meth)acrylic acid-based copolymer having a hydrophilic group and a hydrophobic group. In order to solve this problem, an alkali concentration in the agent for treating the precursor of the three-dimensional object is increased or the temperature when the precursor of the three-dimensional object is soaked into the agent for treating the precursor of the three-dimensional object is increased to enhance the reactivity.
However, it was found that the support material is swollen and the swollen support material cannot be removed quickly if the reactivity is enhanced by increasing an alkali concentration in the agent for treating the precursor of the three-dimensional object or increasing the temperature when the precursor of the three-dimensional object is soaked into the agent for treating the precursor of the three-dimensional object.
The present invention provides a composition of an agent for treating a precursor of a three-dimensional object capable of removing a support material including a (meth)acrylic acid-based copolymer having a hydrophilic monomer and a hydrophobic monomer as a monomer unit from a precursor of a three-dimensional object including a three-dimensional object and the support material more quickly than before, and a method for manufacturing a three-dimensional object in which the composition of an agent for treating a precursor of a three-dimensional object is used.
The composition of an agent for treating a precursor of a three-dimensional object of the present invention is a composition of an agent for treating a precursor of a three-dimensional object for removing a support material including a (meth)acrylic acid-based copolymer having a hydrophilic monomer and a hydrophobic monomer as a monomer unit from a precursor of a three-dimensional object including a three-dimensional object and the support material, wherein the composition of an agent for treating a precursor of a three-dimensional object contains a compound represented by Formula (I) below (component A); and water (component B), and has a pH of 12 or more.

[Formula 2]

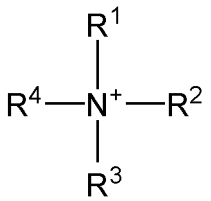

(I)

In Formula (I), $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.
The method for manufacturing a three-dimensional object of the present invention is a method for manufacturing a three-dimensional object, including: a modeling step of obtaining a precursor of a three-dimensional object including a three-dimensional object and a support material including a (meth)acrylic acid-based copolymer having a hydrophilic monomer and a hydrophobic monomer as a monomer unit; and a support material removing step of bringing the precursor of a three-dimensional object into contact with the composition of an agent for treating a precursor of a three-dimensional object to remove the support material.
The support material removing method of the present invention is a support material removing method, including the step of: bringing a precursor of a three-dimensional object including a three-dimensional object and a support material including a (meth)acrylic acid-based copolymer having a hydrophilic monomer and a hydrophobic monomer as a monomer unit into contact with the composition of an agent for treating a precursor of a three-dimensional object to remove the support material.

According to the present invention, a composition of an agent for treating a precursor of a three-dimensional object capable of removing a support material including a (meth)acrylic acid-based copolymer having a hydrophilic monomer and a hydrophobic monomer as a monomer unit from a precursor of a three-dimensional object including a three-dimensional object and the support material more quickly than before, and a method for manufacturing a three-dimensional object in which the composition of an agent for treating a precursor of a three-dimensional object is used can be provided.

One embodiment according to the present invention is explained below.

<Composition of agent for treating precursor of three-dimensional object>

The composition of an agent for treating a precursor of a three-dimensional object of the present embodiment (hereinafter, also simply referred to as "composition of the treating agent") is a composition of the treating agent for removing a support material including a (meth)acrylic acid-based copolymer having a hydrophilic monomer and a hydrophobic monomer as a monomer unit from a precursor of a three-dimensional object including a three-dimensional object and the support material, wherein the composition of an agent for treating a precursor of a three-dimensional object contains a compound represented by Formula (I) below (component A); and water (component B), and has a pH of 12 or more.

[Formula 3]

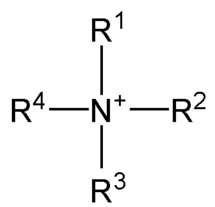

(I)

In Formula (I), $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

According to the composition of the treating agent of the present embodiment, a support material including a (meth)acrylic acid-based copolymer having a hydrophilic monomer and a hydrophobic monomer as a monomer unit can be removed more quickly than before from a precursor of a three-dimensional object including a three-dimensional object and the support material. The exhibition mechanism of the effect of the present embodiment is not clear, but is thought to be as follows.

The support material is presumably quickly removed because the support material includes a (meth)acrylic acid-based copolymer having a hydrophilic monomer and a hydrophobic monomer as a monomer unit, thus is thought to have a carboxylic acid group derived from (meth)acrylic acid and a modified carboxylic acid group, the component A acts on the copolymer and permeates into the copolymer, the component A and the carboxylic acid form a salt to increase the solubility of the copolymer in water and promote the collapse of the copolymer, and further, a hydroxide ion also act on the copolymer and promote hydrolysis and the like due to alkalescence of pH 12 or more.

[Compound represented by Formula (I) (component A)]

The component A quickly removes a support material, and any compound represented by Formula (I) below can be used.

[Formula 4]

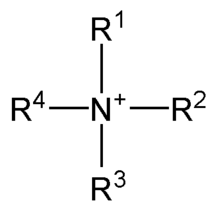

(I)

In Formula (I), $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

In Formula (I) above, $R^1$, $R^2$, and $R^3$ are each independently at least one selected from an alkyl group having a carbon number of 1 or more and 8 or less and a phenyl group, and from the viewpoint of quickly removing the support material, are preferably an alkyl group having a carbon number of 1 or more and 6 or less, more preferably an alkyl group having a carbon number of 1 or more and 4 or less, and further preferably an alkyl group having a carbon number of 2 or more and 4 or less.

In Formula (I) above, $R^4$ is an alkyl group having a carbon number of 1 or more and 8 or less, a hydroxyalkyl group having a carbon number of 1 or more and 8 or less, a phenyl group, or a benzyl group, and from the viewpoint of quickly removing the support material, is preferably an alkyl group having a carbon number of 1 or more and 6 or less, a hydroxyalkyl group having a carbon number of 1 or more and 4 or less, or a benzyl group, more preferably an alkyl group having a carbon number of 1 or more and 4 or less, a hydroxyethyl group, or a benzyl group, further preferably an alkyl group having a carbon number of 1 or more and 4 or less, and further more preferably an alkyl group having a carbon number of 2 or more and 4 or less.

Examples of the compound represented by Formula (I) above include tetraethylammonium, tetrapropylammonium, tetrabutylammonium, tetrapentylammonium, tetrahexylammonium, tetraheptylammonium, tetraoctylammonium, ethyltrimethylammonium, propyltrimethylammonium, butyltrimethylammonium, pentyltrimethylammonium, hexyltrimethylammonium, octyltrimethylammonium, benzyltrimethylammonium, benzyltriethylammonium, hydroxyethyltrimethylammonium, and benzyldimethylphenylammonium. From the viewpoint of quickly removing the support material, tetraethylammonium, tetrapropylammonium, tetrabutylammonium, ethyltrimethylammonium, propyltrimethylammonium, butyltrimethylammonium, pentyltrimethylammonium, hexyltrimethylammonium, octyltrimethylammonium, benzyltrimethylammonium, benzyltriethylammonium, hydroxyethyltrimethylammonium, or benzyldimethylphenylammonium is preferable, tetraethylammonium, tetrapropylammonium, tetrabutylammonium, ethyltrimethylammonium, propyltrimethylammonium, butyltrimethylammonium, benzyltrimethylammonium, benzyltriethylammonium, or hydroxyethyltrimethylammonium is more preferable, tetraethylammonium, tetrapropylammonium, tetrabutylammonium, benzyltrimethylammonium, benzyltriethylammonium, or hydroxyethyltrimethylammonium is further preferable, and tetraethylammonium, tetrabutylammonium, benzyltrimethylammonium, or benzyltriethylammonium is further more preferable. At least one type of the component A needs to be used, and two or more types can be used in combination.

From the viewpoint of quickly removing the support material, the content of the component A in the composition of the treating agent is preferably 0.5% by mass or more, more preferably 0.7% by mass or more, further preferably 0.8% by mass or more, and further more preferably 1.0% by mass or more, and from the same viewpoint, is preferably 5% by mass or less, more preferably 4% by mass or less, further preferably 3.5% by mass or less, and further more preferably 3% by mass or less. The content is preferably 0.5% by mass or more and 5% by mass or less, more preferably 0.7% by mass or more and 4% by mass or less, further preferably 0.8% by mass or more and 3.5% by mass or less, and further more preferably 1.0% by mass or more and 3% by mass or less.

[Compound of Formula (II) (component A')]

The origin of the component A is preferably a compound represented by Formula (II) below of a quaternary ammonium salt (component A').

[Formula 5]

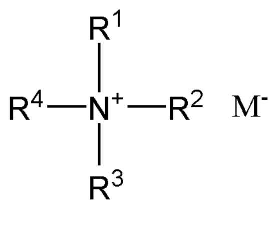

(II)

In Formula (II) $R^1$, $R^2$, and $R^3$ are each independently at least one selected from an alkyl group having a carbon number of 1 or more and 8 or less and a phenyl group, $R^4$ is an alkyl group having a carbon number of 1 or more and 8 or less, a hydroxyalkyl group having a carbon number of 1 or more and 8 or less, a phenyl group, or a benzyl group, and $M^-$ represents a hydroxide ion, a chloride ion, or a bromide ion.

In Formula (II) above, $R^1$, $R^2$, $R^3$, and $R^4$ are the same as $R^1$, $R^2$, $R^3$, and $R^4$ in Formula (I), respectively, and

thus the description thereof is omitted.

In Formula (II) above, $M^-$ is a hydroxide ion, a chloride ion, or a bromide ion, and from the viewpoint of quickly removing the support material, is preferably a hydroxide ion.

Specific examples of the compound represented by Formula (II) above include a hydroxide, a chloride, and a bromide of the compound represented by Formula (I), from the viewpoint of quickly removing the support material, a hydroxide is preferable, tetraethylammonium hydroxide, tetrabutylammonium hydroxide, benzyltrimethylammonium hydroxide, and benzyltriethylammonium hydroxide are more preferable, tetraethylammonium hydroxide, tetrabutylammonium hydroxide, and benzyltrimethylammonium hydroxide are further preferable, and tetraethylammonium hydroxide and tetrabutylammonium hydroxide are further preferable. At least one type of the component A' needs to be used, and two or more types can be used in combination.

The content of the component A' in the composition of the treating agent can be within a range that can satisfy the content of the component A, and from the viewpoint of quickly removing the support material, is preferably 0.5% by mass or more, more preferably 0.7% by mass or more, further preferably 0.8% by mass or more, and further more preferably 1.0% by mass or more, and from the same viewpoint, is preferably 7% by mass or less, more preferably 6% by mass or less, further preferably 5% by mass or less, and further more preferably 4% by mass or less. The content is preferably 0.5% by mass or more and 7% by mass or less, more preferably 0.7% by mass or more and 6% by mass or less, further preferably 0.8% by mass or more and 5% by mass or less, and further more preferably 1.0% by mass or more and 4% by mass or less.

[Water (component B)]

As the component B, industrial water, tap water, ion-exchanged water and the like can be used. From the viewpoint of supply and cost, industrial water is preferable, and from the viewpoint of quickly removing the support material, ion-exchanged water is preferable.

The content of the component B in the composition of the treating agent is preferably 90% by mass or more, and preferably 99% by mass or less. When the composition of the treating agent does not contain a component other than the component A, the content of water in the composition of the treating agent is the rest other than the component A and the counterion thereof.

[Others]

The composition of the treating agent can contain an inorganic alkali, a water-soluble solvent, a surfactant, a builder component, a thickener, a pH adjuster, a preservative, a rust preventive, a pigment, a coloring agent and the like as needed, as long as the effect of the present invention is not impaired. Because the composition of the treating agent containing a coloring agent changes its color when the support material is dissolved depending on the type of the support material, the coloring agent may be used as an indicator showing the progress and the ending of the treatment.

[Inorganic alkali (component C)]

As the component C, any inorganic alkali can be used. Specific examples of the inorganic alkali that can be used include alkali metal hydroxides such as sodium hydroxide and potassium hydroxide, alkali metal silicates such as sodium orthosilicate, sodium metasilicate, and sodium sesquisilicate, alkali metal phosphates such as trisodium phosphate, alkali metal carbonates such as disodium carbonate, sodium hydrogencarbonate, and dipotassium carbonate, and alkali metal borates such as sodium borate. Two or more types of inorganic alkalis can be combined. From the viewpoint of quickly removing the support material, alkali metal hydroxides are preferable, sodium hydroxide and potassium hydroxide are more preferable, and sodium hydroxide is further preferable. At least one type of the component B needs to be used, and two or more types can be used in combination.

From the viewpoint of achieving the pH of the composition of an agent for treating a precursor of a three-dimensional object of 12 or more and quickly removing the support material, the content of the component C in the composition of the treating agent is preferably 0.01% by mass or more, more preferably 0.02% by mass or more, further preferably 0.05% by mass or more, and further more preferably 0.1% by mass or more, and from the same viewpoint, is preferably 5% by mass or less, more preferably 3% by mass or less, further preferably 2% by mass or less, and further more preferably 1% by mass or less. The content is preferably 0.01% by mass or more and 5% by mass or less, more preferably 0.02% by mass or more and 3% by mass or less, further preferably 0.05% by mass or more and 2% by mass or less, and further more preferably 0.1% by mass or more and 1% by mass or less.

[Water-soluble solvent (component D)]

The water-soluble solvent exhibits the performance of breaking the support material and dissolving the support material into the composition of the treating agent.
The water-soluble solvent preferably has solubility of 1.5% by mass or more into water at 20°C. Examples of the water-soluble solvent include a water-soluble solvent selected from a monohydric alcohol, a polyhydric alcohol, and a glycolether.
Examples of the monohydric alcohol include a monohydric alcohol having a carbon number of 1 or more and 5 or less. Specific examples thereof include a monohydric alcohol selected from methanol, ethanol, 1-propanol, 2-propanol, 2-propen-1-ol, 1-butanol, 2-methylpropyl alcohol, 2-butanol, 2-methyl-2-propanol, and pentyl alcohol.
Examples of the polyhydric alcohol include an alkylene glycol having a repeating unit having a carbon number of 2 or more and 3 or less (hereinafter, referred to as C2-C3 alkylene glycol). Examples of the C2-C3 alkylene glycol include ethylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, propylene glycol, dipropylene glycol, and tripropylene glycol. The C2-C3 alkylene glycol preferably has 1 or more and 10 or less oxyethylene groups or oxypropylene groups as a repeating unit.
Examples of the polyhydric alcohol other than the C2-C3 alkylene glycol include a polyhydric alcohol having a carbon number of 2 or more and 8 or less. Specific examples thereof include trimethylene glycol, 1,2-propane diol, 1,3-propane diol, 2-methyl-1,3-propane diol, 1,2-butane diol, 1,3-butane diol, 1,4-butane diol, 1,4-butene diol, 1,4-pentane diol, 1,5-pentane diol, 1,5-hexane diol, 1,6-hexane diol, 1,8-octanediol, glycerin, trimethylolethane, and trimethylolpropane.
An example of the glycolether includes glycolether selected from polyoxyalkylene monoalkylether and polyoxyalkylene dialkylether. The oxyalkylene group in the glycolether is preferably an oxyethylene group. The average number of moles of oxyethylene added is preferably 1 or more and 7 or less. The carbon number of the alkyl group (the alkyl group of the ether at the end) is preferably 1 or more and 4 or less. Specific examples include POE (1 or more and 7 or less) monomethyl ether, POE (1 or more and 7 or less) monoethyl ether,
POE (1 or more and 7 or less) monopropyl ether, POE (1 or more and 7 or less) monobutyl ether, POE (1 or more and 7 or less) monoisobutyl ether, POE (1 or more and 7 or less) monoallyl ether, POE (1 or more and 7 or less) monohexyl ether, POE (1 or more and 7 or less) monophenyl ether, POE (1 or more and 7 or less) dimethyl ether, POE (1 or more and 7 or less) diethyl ether, POE (1 or more and 7 or less) dipropyl ether, and POE (1 or more and 7 or less) dibutyl ether. PEO is an abbreviation of polyoxyethylene, and the number in the parenthesis is the average number of moles of ethylene oxide added (the same applies hereafter).
The water-soluble solvent can be used alone or in combination of two or more types. Among these, from the viewpoint of further improving the performance of breaking the support material and dissolving the support material into the composition of the treating agent, water-soluble solvents selected from methanol, ethanol, 1-propanol, 2-propanol, 2-methyl-2-propanol, ethylene glycol, diethylene glycol, triethylene glycol, propylene glycol, dipropylene glycol, tripropylene glycol, POE (1 or more and 5 or less) monomethyl ether, POE (1 or more and 5 or less) monoethyl ether, POE (1 or more and 5 or less) monopropyl ether, POE (1 or more and 5 or less) monobutyl ether, POE (1 or more and 5 or less) monoisobutyl ether, POE (2 or more and 5 or less) dimethyl ether, and POE (2 or more and 5 or less) diethyl etherare are preferable, and water-soluble solvents selected from ethanol, ethylene glycol, diethylene glycol, triethylene glycol, propylene glycol, dipropylene glycol, POE (1 or more and 3 or less) monomethyl ether, POE (1 or more and 3 or less) monoethyl ether, POE (1 or more and 3 or less) monopropyl ether,
POE (1 or more and 3 or less) monobutyl ether, and POE (1 or more and 3 or less) monoisobutyl ether are more preferable.
From the viewpoint of quickly removing the support material, the content of the component D in the composition of the treating agent is preferably 0.1% by mass or more, more preferably 0.5% by mass or more, further preferably 1% by mass or more, and further more preferably 2% by mass or more, and from the viewpoint of reducing the wastewater treatment load, is preferably 10% by mass or less, more preferably 8% by mass or less, further preferably 6% by mass or less, and further more preferably 5% by mass or less. The content is preferably 0.1% by mass or more and 10% by mass or less, more preferably 0.5% by mass or more and 8% by mass or less, further preferably 1% by mass or more and 6% by mass or less, and further more preferably 2% by mass or more and 5% by mass or less.

[Surfactant]

The composition of the treating agent can contain a surfactant. Examples of the surfactant include a nonionic surfactant, an anionic surfactant, a cationic surfactant, and an amphoteric surfactant, and from the viewpoint of quickly removing the support material, a nonionic surfactant is preferable, and a nonionic surfactant represented by Formula (III) below is more preferable.

[Formula 6]

In Formula (III), $R^5$ is a linear or branched alkyl or alkenyl group having a carbon number of 8 or more and 18 or less, EO is an oxyethylene group, PO is an oxypropylene group, n is an average number of moles of EO added, m is an average number of moles of PO added, n is a number of 2 or more and 20 or less, m is a number of 0 or more and 20 or less, and the addition form of PO and EO in {} can be a random form or a block form.

The pH of the composition of the treating agent is 12 or more. From the viewpoint of quickly removing the support material, the pH is 12 or more, preferably 12.5 or more, more preferably 12.8 or more, and further preferably 13 or more.

The composition of the treating agent can be manufactured by compounding the component A' as the origin of the component A, the component B, and other optional components. When the component A', the component B, the component C, and other optional components are compounded, the component A' and the component C undergo salt exchange, and a composition of the treating agent in which multiple salts different from the component A' and the component C are in an equilibrium state can be manufactured.

<Method for manufacturing three-dimensional object>

The method for manufacturing a three-dimensional object of the present embodiment is a method for manufacturing a three-dimensional object, including: a modeling step of obtaining a precursor of a three-dimensional object including a three-dimensional object and a support material including a (meth)acrylic acid-based copolymer having a hydrophilic monomer and a hydrophobic monomer as a monomer unit; and a support material removing step of bringing the precursor of a three-dimensional object into contact with the composition of the treating agent to remove the support material. According to the method for manufacturing a three-dimensional object of the present embodiment, the support material including a (meth)acrylic acid-based copolymer can be removed more quickly than before. The reason why such an effect is exhibited is thought to be the same as the reason why the composition of the treating agent exhibits the above-mentioned effect.

<Modeling step>

A step of obtaining a precursor of a three-dimensional object including a three-dimensional object and a support material in a known method for manufacturing a three-dimensional object using a 3D printer can be used as the modeling step of obtaining a precursor of a three-dimensional object including a three-dimensional object and a support material including a (meth)acrylic acid-based copolymer having a hydrophilic monomer and a hydrophobic monomer as a monomer unit. Examples of the known method for manufacturing a three-dimensional object using a 3D printer include an FDM system, an inkjet ultraviolet curing system, a stereolithography system, and a selective laser sintering system. Among these, a FDM system, an inkjet ultraviolet curing system, or a stereolithography system is preferable, and a FDM system is more preferable.

The modeling material that is a material of the three-dimensional object is not particularly limited as long as the modeling material is a resin that is used as a modeling material in a conventional method for manufacturing a three-dimensional object, and is preferably a resin other than a (meth)acrylic acid-based copolymer. An example of the modeling material is a thermoplastic resin such as an ABS resin, a polylactic acid resin, a polycarbonate resin, and polyphenylsulfone resin. Among these, the ABS resin and/or the polylactic acid resin are more preferable and the ABS resin is further preferable from a viewpoint of the modeling properties by a 3D printer.

The soluble material for three-dimensional modeling that is a material for the support material contains a (meth)acrylic acid-based copolymer having a hydrophilic monomer and a hydrophobic monomer as a monomer unit.

The modeling material and the soluble material for three-dimensional modeling are preferably discharged by different nozzles.

[(Meth)acrylic acid-based copolymer]

(Hydrophilic Monomer)

Examples of the hydrophilic monomer include acrylic acid, methacrylic acid, diethylaminoethyl acrylate, 2-hydroxyethyl acrylate, 2-hydroxypropyl acrylate, glycidyl acrylate, tetrahydrofurfuryl acrylate, diethylaminoethyl methacrylate, 2-hydroxyethyl methacrylate, 2-hydroxypropyl methacrylate, glycidyl methacrylate, tetrahydrofurfuryl methacrylate, itaconic acid, maleic acid, fumaric acid, and $\alpha$-hydroxy acrylate. Among these, one or more type of the hydrophilic monomers selected from the group consisting of acrylic acid and methacrylic acid is preferable from a viewpoint of the removability of the support material.

(Hydrophobic Monomer)

Examples of the hydrophobic monomer include methylacrylate, ethylacrylate, propylacrylate, butylacrylate, isobutylacrylate, tertiary butylacrylate, 2-ethylhexylacrylate, octylacrylate, isodecylacrylate, laurylacrylate, tridecylacrylate, cetylacrylate, stearylacrylate, cyclohexylacrylate, benzylacrylate, methylmethacrylate, ethylmethacrylate, propylmethacrylate, butylmethacrylate, isobutylmethacrylate, tertiary butylmethacrylate, 2-ethylhexylmethacrylate, octylmethacrylate, isodecylmethacrylate, laurylmethacrylate, tridecylmethacrylate, cetylmethacrylate, stearylmethacrylate, cyclohexylmethacrylate, benzylmethacrylate, styrene, and $\alpha$-methylene-$\gamma$-valerolactone.

The (meth)acrylic acid-based copolymer may contain a monomer unit other than the hydrophilic monomer and the hydrophobic monomer.

[Support material removing step]

The support material removing step is a step of bringing the precursor of a three-dimensional object into contact with the composition of the treating agent to remove the support material. Examples of the method for bringing the precursor of a three-dimensional object into contact with the composition of the treating agent include soaking the precursor of a three-dimensional object in a treating liquid and stirring the liquid, exposing the precursor of a three-dimensional object to a strong water stream, and moving the precursor of a three-dimensional object itself. However, from a viewpoint of preventing the precursor from being damaged and a viewpoint of facilitating operability, the method of soaking the precursor of the three-dimensional object in the composition of the treating agent is preferable. From a viewpoint of improving the property of removing the support material, the precursor soaked in the treating liquid may be irradiated with ultrasonic waves to accelerate the dissolution of the support material.

From the viewpoint of the solubility of the support material, the amount of the composition of the treating agent used is preferably 10 mass times or more and more preferably 20 mass times or more the amount of the support material. From the viewpoint of the operability, the amount of the composition of the treating agent used is preferably 10,000 mass times or less, more preferably 5,000 mass times or less, further preferably 1,000 mass times or less, and further more preferably 100 mass times or less the amount of the support material.

From the viewpoint of the solubility of the support material, the temperature of the composition of the treating agent in the support material removing step is preferably 25°C or more and more preferably 40°C or more. From the viewpoint of suppressing the swelling of the support material, the temperature of the composition of the treating agent in the support material removing step is preferably 80°C or less and more preferably 70°C or less. Considering these viewpoints comprehensively, the temperature of the composition of the treating agent in the support material removing step is preferably 25 to 80°C and more preferably 40 to 70°C.

From the viewpoint of the removability the support material, the time for bringing the support material into contact with the composition of the treating agent is preferably 2 minutes or more, and more preferably 3 minutes or more. From the viewpoint of reducing damages on the three-dimensional object, the time for bringing the support material into contact with the composition of the treating agent is preferably 180 minutes or less, more preferably 120 minutes or less, further preferably 90 minutes or less, and further more preferably 60 minutes or less. Considering these viewpoints comprehensively, the time for bringing the support material into contact with the composition of the treating agent is preferably 2 to 180 minutes, more preferably 2 to 120 minutes, further preferably 3 to 90 minutes, and further more preferably 3 to 60 minutes.

[Support material removing method]

The support material removing method of the present embodiment is a support material removing method, including the step of bringing a precursor of a three-dimensional object including a three-dimensional object and a support material including a (meth)acrylic acid-based copolymer having a hydrophilic monomer and a hydrophobic monomer as a monomer unit into contact with the composition of the treating agent to remove the support material. According to the support material removing method of the present embodiment, the support material including a (meth)acrylic acid-based copolymer can be removed more quickly than before. The reason why such an effect is exhibited is thought to be the same as the reason why the composition of the treating agent exhibits the above-mentioned effect. The precursor of a three-dimensional object is the same as the three-dimensional object in the method for manufacturing a three-dimensional object, and thus the description thereof is omitted. The treatment conditions in the support material removing method of the present embodiment are the same as the treatment conditions described in the support material removing step of the method for manufacturing a three-dimensional object, and thus the description thereof is omitted.

EXAMPLES

Hereinafter, though the present invention will be described in more detail with reference to Examples, the present invention is not limited to these Examples.

<Preparation of composition of an agent for treating a precursor of a three-dimensional object>

[Examples 1 to 17 and Comparative Examples 1 to 5]

Each composition of an agent for treating a precursor of a three-dimensional object (100 g) of Examples 1 to 17 and Comparative Examples 1 to 5 was prepared in a 100 mL screw tube bottle according to the compounding amount shown in Table 1 or Table 2. The numerical values shown in Table 1 or Table 2 represent the amount of the active ingredient, and the unit is % by mass.

[Each component]

The following components were used as the components shown in Table 1 or Table 2.

- Component A'(compound represented by Formula (II))

    Tetraethylammonium hydroxide: manufactured by Tokyo Chemical Industry Co., Ltd., 10% aqueous solution
    Tetrabutylammonium hydroxide: manufactured by FUJIFILM Wako Pure Chemical Corporation, 40% aqueous solution
    Benzyltrimethylammonium hydroxide: manufactured by Tokyo Chemical Industry Co., Ltd., 10% aqueous solution
    Benzyltriethylammonium hydroxide: manufactured by Tokyo Chemical Industry Co., Ltd., 10% aqueous solution
    Hydroxyethyltrimethylammonium hydroxide: FUJIFILM Wako Pure Chemical Corporation, 50% choline solution
    Tetraethylammonium chloride: manufactured by Tokyo Chemical Industry Co., Ltd.
    Tetraethylammonium bromide: manufactured by FUJIFILM Wako Pure Chemical Corporation
    Tetrabutylammonium chloride: manufactured by FUJIFILM Wako Pure Chemical Corporation
    Benzyltrimethylammonium chloride: manufactured by FUJIFILM Wako Pure Chemical Corporation, 60% aqueous solution
    Benzyltriethylammonium chloride: manufactured by FUJIFILM Wako Pure Chemical Corporation
    Benzyldimethylphenylammonium chloride: manufactured by Tokyo Chemical Industry Co., Ltd.
    Hexyltrimethylammonium bromide: manufactured by FUJIFILM Wako Pure Chemical Corporation
    Octyltrimethylammonium chloride: manufactured by Tokyo Chemical Industry Co., Ltd.

- Component that is not component A'

    Dodecyltrimethylammonium chloride: manufactured by FUJIFILM Wako Pure Chemical Corporation
    Hexadecyltrimethylammonium hydroxide: manufactured by Tokyo Chemical Industry Co., Ltd., 10% aqueous solution

- Component B (water)
  Ion-exchanged water: pure water of 1 μS/cm or less manufactured by the pure water device G-10DSTSET manufactured by ORGANO CORPORATION
- Component C (inorganic alkali)
  Sodium hydroxide: manufactured by Tokuyama Corporation, liquid caustic soda (concentration: 48% by mass)
- Component D (water-soluble solvent)

    Diethylene glycol monobutyl ether: butyl diglycol (BDG) manufactured by NIPPON NYUKAZAI CO., LTD.
    Ethanol: manufactured by FUJIFILM Wako Pure Chemical Corporation

[Table 1]

| | | Formulas (I) (II) | | | | | Examples | | | | | | | | | | | | | | | | |
|---|---|---|---|---|---|---|---|---|---|---|---|---|---|---|---|---|---|---|---|---|---|---|---|
| Component | | $R^1$ | $R^2$ | $R^3$ | $R^4$ | M | 1 | 2 | 3 | 4 | 5 | 6 | 7 | 8 | 9 | 10 | 11 | 12 | 13 | 14 | 15 | 16 | 17 |
| Component A' | Tetraethyl ammonium hydroxide | Ethyl | Ethyl | Ethyl | Ethyl | OH | 1.77 | | | | | | | | | | | | 0.89 | 1.18 | 1.77 | 1.77 | 1.77 |
| | Tetrabutyl ammonium hydroxide | Butyl | Butyl | Butyl | Butyl | OH | | 3.11 | | | | | | | | | | | | | | | |
| | Benzyltrimethyl ammonium hydroxide | Methyl | Methyl | Methyl | Benzyl | OH | | | 2.01 | | | | | | | | | | | | | | |
| | Benzyltriethyl ammonium hydroxide | Ethyl | Ethyl | Ethyl | Benzyl | OH | | | | 2.51 | | | | | | | | | | | | | |
| | Hydroxyethyl trimethylammonium hydroxide | Methyl | Methyl | Methyl | Hydroxy ethyl | OH | | | | | 1.45 | | | | | | | | | | | | |
| | Tetraethyl ammonium chloride | Ethyl | Ethyl | Ethyl | Ethyl | Cl | | | | | | 1.99 | | | | | | | | | | | |
| | Tetraethyl ammonium bromide | Ethyl | Ethyl | Ethyl | Ethyl | Br | | | | | | | 2.52 | | | | | | | | | | |
| | Tetrabutyl ammonium chloride | Butyl | Butyl | Butyl | Butyl | Cl | | | | | | | | 3.34 | | | | | | | | | |
| | Benzyltrimethyl ammonium chloride | Methyl | Methyl | Methyl | Benzyl | Cl | | | | | | | | | 2.23 | | | | | | | | |
| | Benzyltriethyl ammonium chloride | Ethyl | Ethyl | Ethyl | Benzyl | Cl | | | | | | | | | | 2.73 | | | | | | | |
| | Benzyldimethyl phenylammonium chloride | Methyl | Methyl | Phenyl | Benzyl | Cl | | | | | | | | | | | 2.97 | | | | | | |
| | Hexyltrimethyl ammonium bromide | Methyl | Methyl | Methyl | Hexyl | Br | | | | | | | | | | | | 2.69 | | | | | |
| | Octyltrimethyl ammonium chloride | Methyl | Methyl | Methyl | Octyl | Cl | | | | | | | | | | | | | 1.25 | 0.83 | | | |
| Component B | Water | | | | | | 98.23 | 96.89 | 97.99 | 97.49 | 98.55 | 97.51 | 96.98 | 96.16 | 97.27 | 96.77 | 96.53 | 96.81 | 97.62 | 97.99 | 95.23 | 93.23 | 93.23 |
| Component C | Sodium Hydroxide | | | | | | | | | | | 0.50 | 0.50 | 0.50 | 0.50 | 0.50 | 0.50 | 0.50 | 0.25 | | | | |
| Component D | Diethylene glycol monobutyl ether | | | | | | | | | | | | | | | | | | | | 3.00 | 5.00 | |
| | Ethanol | | | | | | | | | | | | | | | | | | | | | | 5.00 |
| Concentration of component A (% by mass) | | | | | | | 1.57 | 2.91 | 1.81 | 2.31 | 1.25 | 1.56 | 1.56 | 2.91 | 1.80 | 2.31 | 2.55 | 1.73 | 1.82 | 1.73 | 1.57 | 1.57 | 1.57 |
| pH (25°C) | | | | | | | 13.4 | 13.4 | 13.3 | 13.4 | 13.4 | 13.4 | 13.0 | 13.4 | 13.4 | 13.4 | 13.4 | 13.0 | 13.1 | 13.0 | 13.1 | 13.1 | 13.2 |
| Evaluation | Dissolution rate (mg/min) | | | | | | 223.3 | 223.3 | 186.7 | 170.0 | 144.7 | 113.3 | 110.5 | 90.0 | 123.3 | 116.7 | 80.0 | 127.5 | 156.7 | 170.0 | 256.3 | 245.3 | 245.3 |
| | Time until the moving part moves (minutes) | | | | | | | 130 | 100 | | | | | | | | | | | | | | |

[Table 2]

| | | Formulas (I) (II) | | | | | Comparative Examples | | | | | | | | |
|---|---|---|---|---|---|---|---|---|---|---|---|---|---|---|---|
| Component | | $R^1$ | $R^2$ | $R^3$ | $R^4$ | M | 1 | 2 | 3 | 4 | 5 | 6 | 7 | 8 | 9 |
| Component A' | Benzyltrimethylammonium chloride | Methyl | Methyl | Methyl | Benzyl | Cl | | | | | 2.2300 | | | | |
| Component that is not component A' | Dodecyltrimethylammonium chloride | Methyl | Methyl | Methyl | Dodecyl | Cl | | 3.17 | | | | | | | |
| | Hexadecyltrimethylammonium hydroxide | Methyl | Methyl | Methyl | Hexadecyl | OH | 3.62 | | 3.62 | | | | | | |
| | N,N-dimethylaminohexanol | | | | | | | | | | | | 5.10 | 3.06 | |
| | Diisopropanolamine | | | | | | | | | | | | | | 22.76 |
| Component B | Water | | | | | | 96.38 | 96.33 | 95.88 | 99.00 | 97.7657 | | 94.9 | 96.90 | 77.20 |
| Component C | Sodium Hydroxide | | | | | | | 0.50 | 0.50 | 1.00 | 0.0043 | | | | |
| Component D | Diethylene glycol monobutyl ether | | | | | | | | | | | | | | |
| | Ethanol | | | | | | | | | | | | | | |
| Concentration of component A (% by mass) | | | | | | | - | - | - | - | | - | | | |
| pH (25°C) | | | | | | | 13.3 | 13.0 | 13.7 | 13.3 | 11.0 | 12.9 | 12.0 | 12.0 | 12.0 |
| Evaluation | Dissolution rate (mg/min) | | | | | | 13.3 | 0 | 0 | 77.0 | 3.3 | 46.7 | 220 | 170.0 | 126.7 |
| | Time until the moving part moves (minutes) | | | | | | | | | 140 | | 170 | | | |
| Note) a support remover manufactured by Stratasys Ltd. was used in Comparative Example 6. | | | | | | | | | | | | | | | |

[Comparative Example 6]

For Comparative Example 6, "Support remover (liquid type)" (manufactured by MARUBENI INFORMATION SYSTEMS CO., LTD.) commercially available as a support material cleaning liquid for Stratasys Ltd. manufacturing type systems was used. The contents described in the safety data sheet of "Support remover (liquid type)" are shown in Table 3.

[Table 3]

| Contents | Content (%) |
|---|---|
| Sodium Carbonate | 1.46 |
| Sodium Hydroxide | 0.55 |
| Sodium Sulfate | ~0.13 |
| Zeolite | ~0.07 |
| Sodium dodecyl sulfate (SDS) | ~0.06 |
| Film foam polymer | ~0.09 |

<Evaluation Methods>

<pH measurement>

The pH of the composition of an agent for treating a precursor of a three-dimensional object at 25°C was used, and the numerical value 3 minutes after the electrode of the pH meter (DKK-TOA CORPORATION, HM-30G) was soaked in the composition of an agent for treating a precursor of a three-dimensional object was measured.

[Evaluation of removability of support material I]

[Preparation of evaluation sample I]

As evaluation sample I, a filamentous soluble material for three-dimensional modeling having a length of 60 mm and a diameter of 1.8 mm (methacrylic acid-based copolymer manufactured by Stratasys Ltd.; trade name SR-30 (monomer unit; 45% by mass of methacrylic acid, 34% by mass of styrene, 21% by mass of n-butyl acrylate), for FDM) was used.

[Evaluation procedure]

The inside of a 100 mL screw tube bottle in which each composition of an agent for treating a precursor of a three-dimensional object (100 g) according to the Examples and Comparative Examples was placed and a magnetic stirrer was placed was heated to 60°C. Then, 1 g of evaluation sample I was added, and the mixture was stirred for 3 minutes at a rotation speed of 500 rpm. The undissolved evaluation sample I was collected, filtered, and dried under reduced pressure at 60°C for 12 hours. From the mass difference before and after the test, the dissolution rate was calculated by the following formula. The results are shown in Table 1 or Table 2.

$$\text{Dissolution rate (mg/min)} = [\text{Mass before test (mg)} - \text{Mass after test (mg)}] \div 3\ \text{(min)}$$

[Evaluation of removability of support material II]

[Preparation of evaluation sample II]

ABS (ABS resin manufactured by Stratasys Ltd.) was used as a modeling material and the SR-30 was used as a soluble material for three-dimensional modeling to form an evaluation sample II (precursor of a three-dimensional object) by the FDM system 3D printer Fortus 250MC manufactured by Stratasys Ltd. Fig. 1 is a schematic drawing of a shape of the evaluation sample II. The evaluation sample II shown in Fig. 1 consists of a precursor for the three-dimensional object consisting of a three-dimensional object 1 and a support material 2. Though the support material 2 is not shown to help understanding the shape of the three-dimensional object 1, the support material 2 fills voids of the three-dimensional object 1.

[Evaluation procedure]

Each composition of the treating agent (500 g) of Examples 2 and 3 and Comparative Examples 4 and 6 was individually prepared in a 500 mL glass beaker. A magnetic stirrer was placed in the composition of the treating agent, which was heated to 60°C and stirred at a rotation speed of 500 rpm. The evaluation sample II in a stainless steel basket was soaked in the composition of an agent for treating a precursor of a three-dimensional object, and the time until the moving part moves was measured. The results are shown in Table 1 or Table 2.

It is found that, compared to the compositions of the treating agent in Comparative Examples 1 to 4 containing no component A, the composition of the treating agent in Comparative Example 5 having a pH of less than 12, and the composition of the treating agent in Comparative Example 6 which is a commercially available support material cleaning solution, the compositions of the treating agent in Examples 1 to 17 have a higher dissolution rate and are capable of quickly removing the support material. By comparing Examples 1 and 2 to Comparative Example 7, and Example 4 to Comparative Example 8, respectively, it is found that the same dissolution rate as that in the amine compound can be obtained by the compound represented by Formula (II) in an amount smaller than that of the amine compound. By comparing Example 2 to Comparative Example 8, it is found that a larger dissolution rate than that in the amine compound can be obtained by the compound represented by Formula (II) in an addition amount similar to that of the amine compound.

## Claims

1. A composition of an agent for treating a precursor of a three-dimensional object for removing a support material including a (meth)acrylic acid-based copolymer having a hydrophilic monomer and a hydrophobic monomer as a monomer unit from a precursor of a three-dimensional object including a three-dimensional object and the support material, wherein

   the composition of an agent for treating a precursor of a three-dimensional object contains a compound represented by Formula (I) below (component A), and water (component B), and has a pH of 12 or more:

   [Formula 1]

   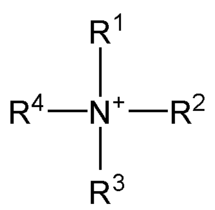

   (I)

   wherein $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

2. The composition of an agent for treating a precursor of a three-dimensional object according to claim 1, wherein the component A is derived from a compound represented by Formula (II) below (component A').

[Formula 2]

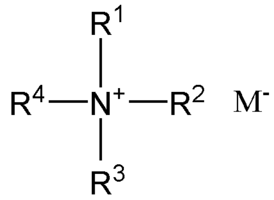

(II)

wherein $R^1$, $R^2$, and $R^3$ are each independently at least one selected from an alkyl group having a carbon number of 1 or more and 8 or less and a phenyl group, $R^4$ is an alkyl group having a carbon number of 1 or more and 8 or less, a hydroxyalkyl group having a carbon number of 1 or more and 8 or less, a phenyl group, or a benzyl group, and $M^-$ represents a hydroxide ion, a chloride ion, or a bromide ion.

**3.** The composition of an agent for treating a precursor of a three-dimensional object according to claim 1 or 2, further containing an inorganic alkali (component C) .

**4.** A composition of an agent for treating a precursor of a three-dimensional object for removing a support material including a (meth)acrylic acid-based copolymer having a hydrophilic monomer and a hydrophobic monomer as a monomer unit from a precursor of a three-dimensional object including a three-dimensional object and the support material, wherein

the composition of an agent for treating a precursor of a three-dimensional object contains a compound represented by Formula (II) below (component A') derived from a compound represented by Formula (I) below (component A); water (component B); and an inorganic alkali (component C), and has a pH of 12 or more:

[Formula 3]

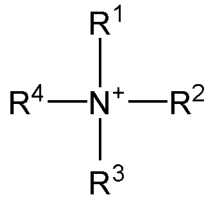

(I)

wherein $R^1$, $R^2$, and $R^3$ are each independently at least one selected from an alkyl group having a carbon number of 1 or more and 8 or less and a phenyl group, and $R^4$ represents an alkyl group having a carbon number of 1 or more and 8 or less, a hydroxyalkyl group having a carbon number of 1 or more and 8 or less, a phenyl group, or a benzyl group.

[Formula 4]

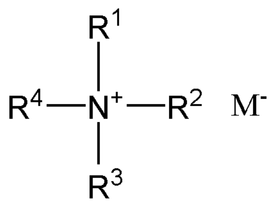

(II)

wherein $R^1$, $R^2$, and $R^3$ are each independently at least one selected from an alkyl group having a carbon number of 1 or more and 8 or less and a phenyl group, $R^4$ is an alkyl group having a carbon number of 1 or more and 8 or less, a hydroxyalkyl group having a carbon number of 1 or more and 8 or less, a phenyl group, or a benzyl group, and $M^-$ represents a hydroxide ion, a chloride ion, or a bromide ion.

**5.** The composition of an agent for treating a precursor of a three-dimensional object according to any one of claims

1 to 4, further containing a water-soluble solvent (component D).

6. The composition of an agent for treating a precursor of a three-dimensional object according to claim 5, wherein the component D is selected from a monohydric alcohol, a polyhydric alcohol, and a glycolether.

7. The composition of an agent for treating a precursor of a three-dimensional object according to any one of claims 1 to 6, wherein a content of the component A in the composition of an agent for treating a precursor of a three-dimensional object is 0.5% by mass or more and 5% by mass or less.

8. The composition of an agent for treating a precursor of a three-dimensional object according to any one of claims 1 to 7, wherein a content of the component B in the composition of the treating agent is 90% by mass or more.

9. The composition of an agent for treating a precursor of a three-dimensional object according to any one of claims 1 to 8, wherein a modeling material that is a material of the three-dimensional object is a resin other than a (meth)acrylic acid-based copolymer.

10. A method for manufacturing a three-dimensional object, comprising:

a modeling step of obtaining a precursor of a three-dimensional object including a three-dimensional object and a support material including a (meth)acrylic acid-based copolymer having a hydrophilic monomer and a hydrophobic monomer as a monomer unit; and
a support material removing step of bringing the precursor of a three-dimensional object into contact with a composition of an agent for treating a precursor of a three-dimensional object to remove the support material,
wherein the composition of an agent for treating a precursor of a three-dimensional object is the composition of an agent for treating a precursor of a three-dimensional object according to any one of claims 1 to 9.

11. The method for manufacturing a three-dimensional object according to claim 10, wherein a modeling material that is a material of the three-dimensional object is a resin other than a (meth)acrylic acid-based copolymer.

12. The method for manufacturing a three-dimensional object according to claim 10 or 11, wherein an FDM system, an inkjet ultraviolet curing system, or a stereolithography system is used in the modeling step.

13. The method for manufacturing a three-dimensional object according to any one of claims 10 to 12, wherein the three-dimensional object and the support material are each discharged from different nozzles in the modeling step.

14. A support material removing method, comprising the step of:
bringing a precursor of a three-dimensional object including a three-dimensional object and a support material including a (meth)acrylic acid-based copolymer having a hydrophilic monomer and a hydrophobic monomer as a monomer unit into contact with the composition of an agent for treating a precursor of a three-dimensional object according to any one of claims 1 to 6 to remove the support material.

15. Use of the composition of an agent for treating a precursor of a three-dimensional object according to any one of claims 1 to 9, for removing a support material including a (meth)acrylic acid-based copolymer having a hydrophilic monomer and a hydrophobic monomer as a monomer unit from a precursor of a three-dimensional object including a three-dimensional object and the support material.

Fig.1

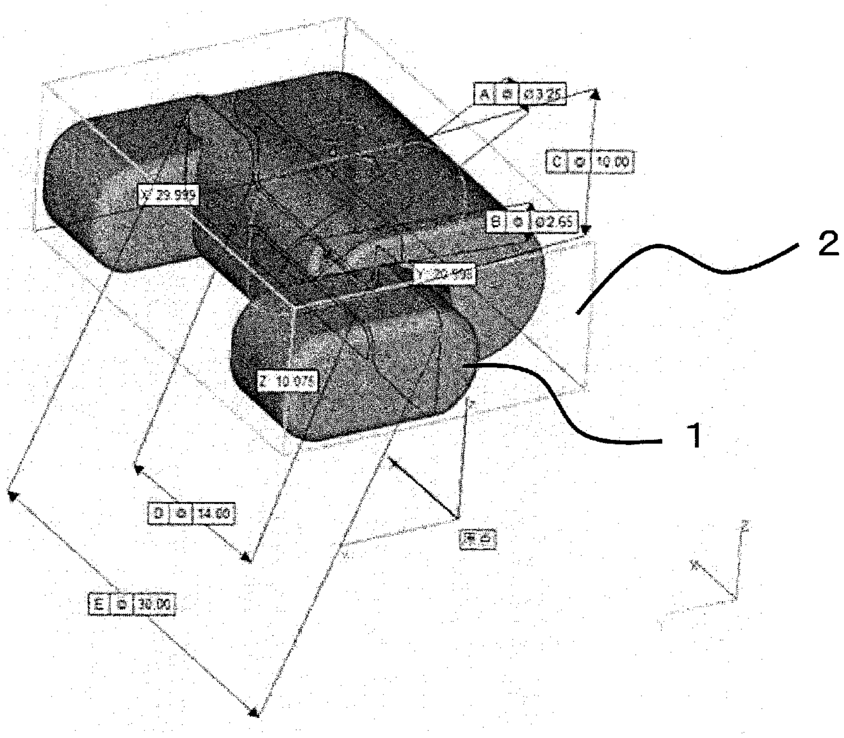

**INTERNATIONAL SEARCH REPORT**

International application No.
PCT/JP2019/045781

A. CLASSIFICATION OF SUBJECT MATTER
B29C 64/314(2017.01)i; B29C 64/40(2017.01)i
FI: B29C64/40; B29C64/314

According to International Patent Classification (IPC) or to both national classification and IPC

B. FIELDS SEARCHED

Minimum documentation searched (classification system followed by classification symbols)
B29C64/314; B29C64/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/199324 A1 (KAO CORP.) 23.11.2017 (2017-11-23) paragraphs [0014]-[0073], fig. 1 | 1-15 |
| A | JP 2011-020412 A (ALTECH CO., LTD.) 03.02.2011 (2011-02-03) paragraphs [0009]-[0025] | 1-15 |
| A | JP 2011-005658 A (ALTECH CO., LTD.) 13.01.2011 (2011-01-13) paragraphs [0009]-[0025] | 1-15 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 February 2020 (10.02.2020) | 25 February 2020 (25.02.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/045781

| Patent Documents referred in the Report | Publication Date | Patent Family | Publication Date |
|---|---|---|---|
| WO 2017/199324 A1 | 23 Nov. 2017 | US 2019/0185634 A1<br>paragraphs [0014]-[0110], fig. 1<br>EP 3459717 A1<br>CN 109153187 A | |
| JP 2011-020412 A | 03 Feb. 2011 | (Family: none) | |
| JP 2011-005658 A | 13 Jan. 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008507619 T
- JP 2012509777 T
- WO 2017199323 A
- WO 2017199324 A